# EUROPÄISCHE PATENTSCHRIFT

(11) **EP 1 502 398 B1**
(45) Veröffentlichungstag und Bekanntmachung des Hinweises auf die Patenterteilung: **12.07.2006**
(21) Anmeldenummer: 03714957.2
(22) Anmeldetag: 13.03.2003
(51) Int. Cl.: H04L 12/58

(54) **VERFAHREN ZUR ERSTELLUNG EINER REPRÄSENTATION VON MINDESTENS EINER MULTIMEDIA-NACHRICHT, ZUGEHÖRIGES FUNKKOMMUNIKATIONS-NETZWERK SOWIE SUBSYSTEM**
METHOD FOR CREATING A REPRESENTATION OF AT LEAST ONE MULTIMEDIA MESSAGE, ASSOCIATED RADIO COMMUNICATION NETWORK, AND SUBSYSTEM
PROCEDE POUR ELABORER UNE REPRESENTATION D'AU MOINS UN MESSAGE MULTIMEDIA, RESEAU DE COMMUNICATION RADIO ET SOUS-SYSTEME ASSOCIES

(30) Priorität: 03.05.2002 DE 10219894
(43) Veröffentlichungstag der Anmeldung: 02.02.2005
(73) Patentinhaber: SIEMENS AKTIENGESELLSCHAFT, 80333 München (DE)
(72) Erfinder: HEUER, Jörg, 81539 München (DE); ILLGNER-FEHNS, Klaus, 81549 München (DE); LAUMEN, Josef, 31142 Hildesheim (DE); RAUSCHENBACH, Uwe, 85586 Poing (DE); TRAUBERG, Markus, 38159 Velchede (DE); VAN NIEKERK, Sabine, 38228 Salzgitter (DE)
(86) Internationale Anmeldenummer: PCT/EP2003/050060
(87) Internationale Veröffentlichungsnummer: WO 2003/094456

(56) Entgegenhaltungen:
- WO-A-00/54174
- DE-A- 19 956 023
- US-A1- 2002 010 716
- US-A1- 2002 044 634
- "Universal Mobile Telecommunications System (UMTS);Multimedia Messaging Service (MMS), Functional description; Stage 2 (3GPP TS 23.140 version 4.2.0 Release 4)" ETSI TS 123 140 V4.2.0, XX, XX, März 2001 (2001-03), XP002180514
- W3C: "XSL Transformations (XSLT)" W3C RECOMMENDATION, 16. November 1999 (1999-11-16), XP002189938 Gefunden im Internet: <URL:http://www.w3.org/TR/xslt> [gefunden am 2002-02-12]

## Beschreibung

Die DE 199 56 023 A1 beschäftigt sich lediglich ganz allgemein damit, wie der Nachrichtenaustausch durch eine Anpassungsvorrichtung zwischen mindestens einer Zentrale und einem Endgerät in Abhängigkeit mindestens einer Vorgabe des Endgeräts oder der mindestens einen Zentrale gesteuert wird.

Der Erfindung liegt die Aufgabe zu Grunde, einen Weg aufzuzeigen, wie die Präsentation mindestens einer Multimedia-Nachricht auf mindestens einem empfangenden Teilnehmergerät in flexibler Weise vom jeweilig empfangenden Teilnehmergerät selbst spezifiziert werden kann. Diese Aufgabe wird mit den Merkmalen des Anspruchs 1 gelöst.

Dadurch ist es dem jeweilig empfangenden Teilnehmergerät ermöglicht, zu spezifizieren, wie die Media-Komponenten der jeweilig zu übertragenden Multimedia-Nachricht in mindestens einem Server behandelt werden soll, um diese Multimedia-Nachricht nach ihrem Abruf vom jeweilig empfangenden Teilnehmergerät benutzerspezifisch auf diesem Teilnehmergerät darstellen zu können. Insbesondere können dabei Struktur- und Darstellungsart der jeweiligen Multimedia-Nachricht empfänger-individualisiert angepasst werden.

Die Erfindung betrifft auch ein Funkkommunikations-Netzwerk gemäß Anspruch 9.

Insbesondere erhält ein Nutzer eines Multimedia Messaging Service (abgekürzte Schreibweise: MMS) z.B. nach der Spezifikation in 3G TS 22.140 v.4.1.0, Release 4; 3rd Generation Partnership Project; Technical Specification Group Services and System Aspects; Service Aspects; Multimedia Messaging Service; Stage 1, 3G TS 23.140 version 4.3.0, Release 4; Third Generation Partnership Project; Technical Specification Group Terminals; Multimedia Messaging Service (MMS); Functional Description; Stage 2 mit Hilfe des erfindungsgemäßen Prinzips eine höhere Flexibilität beim Senden und Empfangen von Nachrichten des MMS. Dies ermöglicht einem Sender von Nachrichten des MMS, den Empfänger dieser Multimedianachrichten (abgekürzte Schreibweise: MM) sowohl über Absicht bzw. Bedeutung einzelner Media-Elemente bzw.- -Komponenten einer MM als auch über den inhaltlichen Kontext zwischen den verschiedenen Media-Elementen einer MM zu informieren.

Einem Empfänger von Nachrichten, d.h. einem empfangenden Teilnehmergerät, des MMS ist in vorteilhafter Weise eine flexible Anfrage nach empfangenen Media-Elementen ermöglicht, d. h. sie ermöglicht ihm, festzulegen, welche Teile von Inhalten oder welche Inhalte einer oder mehrerer Nachrichten er tatsächlich empfangen möchte. Als Entscheidungsgrundlage kann einem Empfänger z.B. die Wichtigkeit einzelner Inhalte einer MM dienen.

Darüber hinaus ermöglicht diese Erfindung einem Empfänger von Nachrichten des MMS eine höhere Flexibilität bei der Darstellung einer MM auf dem jeweiligen Empfangsterminal bzw. Teilnehmergerät, d.h. der Empfänger definiert, wie die Inhalte einer oder mehrerer MMs auf dem Empfangsgerät präsentiert/dargestellt werden.

Die Erfindung und ihre Weiterbildungen werden nachfolgend anhand von Zeichnungen näher erläutert.

Es zeigen:
- Figur 1: in schematischer Darstellung ein allgemeines Nachrichten-Flussdiagramm im Multimedia Messaging Service zwischen einer sendenden und einer empfangenden Nutzerapplikation,
- Figur 2: in schematischer Darstellung ein Nachrichten-Flussdiagramm mit einer ersten Möglichkeit einer erfindungsgemäßen Datenanpassung auf Basis eines Links auf XSL-Informationen (XSL = Extensible Style Sheet Language) in der UAProf-Info im Multimedia Messaging Service von UMTS,
- Figur 3: in schematischer Darstellung ein weiteres Nachrichten-Flussdiagramm für eine weitere erfindungsgemäße Möglichkeit zur Datenanpassung auf Basis von XSL-Informationen in der UAProf-Info im Multimedia Messaging Service, und
- Figuren 4, 5: jeweils in schematischer Darstellung verschiedene Möglichkeiten, um nach dem erfindungsgemäßen Verfahren die Transformation und Übermittlung einer Multimedia-Nachricht von einem netzwerkseitigen Server zu mindestens einem empfangenden Teilnehmergerät zu initiieren.

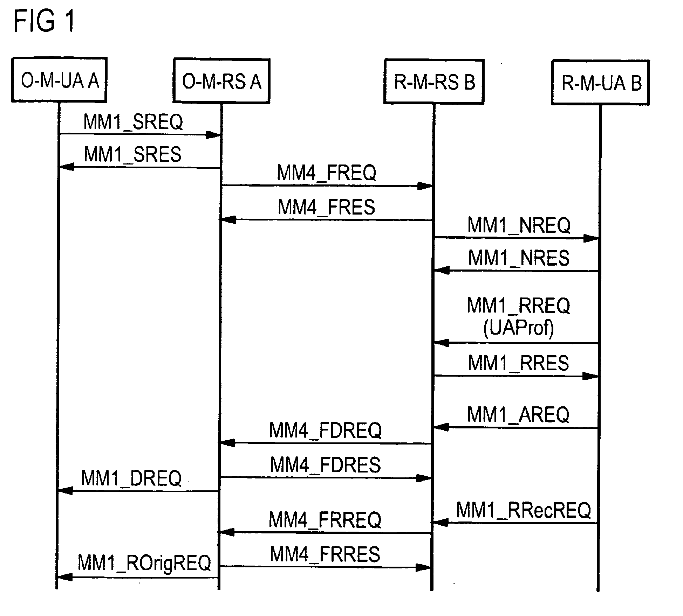

Elemente mit gleicher Funktion und Wirkungsweise sind in den Figuren 1 mit 5 jeweils mit denselben Bezugszeichen versehen.

Das Mobilfunksystem GSM (Global System for Mobile Communications) bietet neben der Sprachtelephonie auch die Möglichkeit, kurze Textnachrichten von bis zu 160 Zeichen Länge zu versenden bzw. zu empfangen, den sogenannten Short Message Service (SMS). Als Nachfolger des SMS wird zur Zeit insbesondere für das Mobilfunksystem der nächsten Generation UMTS (Universal Mobile Telecommunication System) eine multimediafähige Variante eines mobilen Nachrichtendienstes standardisiert, der sogenannte Multimedia Messaging Service (MMS). Die Beschränkung auf reine Textinhalte entfällt, und es wird möglich, beliebige Inhalte in eine MMS-Nachricht einzubetten, wozu u.a. z.B. Audio- und Videoinhalte, Standbilder, Grafiken und Texte zählen. Nachrichten mit multimedialen Inhalten werden im Folgenden zur besseren Abgrenzung von den reinen Textnachrichten des SMS nur noch kurz MM (Multimedia Message) genannt. Eine Multimedianachricht besteht insbesondere aus einem Kopfteil (dem so genannten "Header") und einem Datenteil (dem so genannten "Body"), der die Multimediaobjekte bzw.

Multimediakomponenten enthält. Im folgenden heißen diese auch Medienkomponenten oder Media-Elemente.

Ein Sender einer Nachricht des MMS kann bisher (wie z.B. im SMS) Empfänger dieser MM lediglich durch Hinzufügen von erklärendem Text und/oder einer erklärenden Tonaufnahme über Absicht bzw. Bedeutung einzelner Media-Elemente einer MM oder den inhaltlichen Kontext zwischen den verschiedenen Media-Elementen einer MM informieren. Diese Information kann auf Empfängerseite nicht automatisch ausgewertet werden. Vor Empfang einer MM ist es einem Nutzer nicht möglich, auf Basis dieser Information eine Entscheidung zu treffen, welche (Teile von) Inhalte(n) einer oder mehrerer Nachrichten er tatsächlich empfangen möchte. Darüber hinaus wird die Darstellung bzw. Präsentation einer MM auf dem Empfangsterminal bisher vom Absender dieser MM festgelegt. Es ist somit in derartigen konventionellen Funkkommunikationssystemen empfängerseitig nur wenig oder gar keine Flexibilität für die Präsentation von Multimedianachrichten bereitgestellt.

Die Entscheidung über Konvertierung, Adaptation und Herausfiltern/Löschen von Nachrichteninhalten liegt beim jeweiligen MMS Dienstanbieter auf der Netzwerkseite. Diese Entscheidung basiert heutzutage lediglich auf quasi-statischen Nutzer-Präferenzen und den Charakteristika bzw. Fähigkeiten des jeweiligen Endgeräts des Empfängers und kann nicht dynamisch vom Nutzer beeinflusst werden.

Insbesondere der Standard ISO/IEC 15938, im folgenden mit MPEG-7 (motion picture expert group) bezeichnet, spezifiziert eine Schnittstelle zur Beschreibung multimedialer Inhalte. Durch die Standardisierung dieser Schnittstelle ist es möglich, Informationen über den Inhalt von Media-Elementen, d.h. Medienkomponenten auszutauschen. Ein solcher Datenaustausch kann beispielsweise programmbegleitende Zusatzinformation von Rundfunksendungen beinhalten. Hierbei werden die Informationen im MPEG-7 Format mit den Media-Daten gemultiplext an den Empfänger übertragen, der diese Informationen während der Sendung abrufen oder in Abhängigkeit von diesen Informationen eine Aufnahme der Media-Daten steuern kann.

Vorteile von MPEG7 in MMS sind beispielsweise:
1. Senderseitige Beschreibung der Medienkomponenten und Herstellen eines Kontextes zwischen den einzelnen Medienelementen im standardisierten MPEG-7 Format.
2. Netzwerkseitige Konvertierung und Adaption von Nachrichteninhalten in MMS basiert nun zusätzlich zu den Nutzer-Präferenzen und den Befähigungen des Empfängerendgeräts auf:
   a.) Information über Absicht / Bedeutung der einzelnen Media-Elemente einer MM;
   b.) Kontext zwischen den verschiedenen Media-Elementen einer MM;
   c.) Entscheidung liegt beim Empfänger:
      - Dies verhilft zu einer höheren Flexibilität beim Empfang einer MM (Empfänger definiert, welche Art von Inhalt oder welcher Inhalt empfangen werden soll, sowie flexible Media-Element Anfrage);
      - XSLT (extensible style sheet language transformation): höhere Flexibilität bei der Darstellung einer MM auf dem jeweiligen Empfangsterminal (Empfänger definiert, wie die Inhalte präsentiert werden)
   d.) Die Medienadaption erfolgt "im Netz", kann aber auch in beschränktem Umfang (abhängig von der Leistungsfähigkeit) im Endgerät erfolgen.
3. Die vorgeschlagenen MPEG7 / XSLT Informationen sind transparente "Attachments"("Anhängsel") einer MM: Vorteil: unabhängig vom Transportprotokoll

Die neuartige Idee des erfindungsgemäßen Lösungsprinzips wird im folgenden insbesondere mit Hilfe der im MMS Protokoll (siehe Literaturhinweis [2]) spezifizierten Signalisierung beispielhaft erläutert. Dabei werden inhaltsbeschreibende Metadaten (abgekürzt im Folgenden: MD) (z.B. MPEG-7) zur Anpassung von MM-Nachrichten z.B. an Nutzerpräferenzen und Geräteeigenschaften mit Hilfe von Transformationen und Formatierungsanweisungen (z.B. XSL) genutzt.

Aufbauend auf dieser grundlegenden Idee kann eine Anpassung der Nachricht auf folgende Weise realisiert werden:
a) das Empfangsgerät (im folgenden R-MUA genannt) signalisiert dem empfangsseitigen Nachrichtenserver (im folgenden R-MRS genannt) einen (evtl. auch parametrisierten) Verweis auf die Transformations- und Formatierungsanweisungen, die auf einem zweiten Server vorliegen. Basierend hierauf kann der R-MRS die parametrisierten Transformations- und Formatierungsanweisungen abrufen und die Nachrichten anpassen, und anschließend angepasst (z.B. in Form einer SMIL Präsentation (synchronized multimedia integration language) an den R-MRS übertragen.
b) der R-MUA signalisiert gemäß MMS (siehe Literaturhinweis [2]) dem R-MRS (evtl. parametrisierte) Transformations- und Formatierungsanweisungen. Basierend hierauf kann der R-MRS die Nachrichten anpassen und anschließend angepasst (z.B. in Form einer SMIL Präsentation) an den R-MRS übertragen.
c) der R-MUA signalisiert nach a) oder b) die (evtl. parametrisierte) Transformations- und Formatierungsanweisungen. Eine Anpassung der Nachricht wird durch einen weiteren Server, dem VAS Server durchgeführt, dem hierzu die Nachricht und die (evtl. parametrisierten) Transformations- und Formatierungsanweisungen oder mindestens einen Verweis bzw. "Link" hierauf übermittelt wird.

Figur 1 zeigt gemäß der Spezifikation in [2] ein allgemeines Nachrichtenflussdiagramm im Multimedia Messaging Service (MMS), in dem der Austausch der MMS Nachrichten zwischen den beteiligten Instanzen, d.h. im einzelnen senderseitige MMS Nutzerapplikation A (O-M-UAA), senderseitige MMS Verbindungseinheit A (O-M-RSA), empfängerseitige MMS Verbindungseinheit B (R-M-RSB), empfängerseitige MMS Nutzerapplikation B (R-M-UA B), bei Versand bzw. Empfang einer MM dargestellt ist.

Unter MMS Nutzerapplikation (M-UA) wird dabei insbesondere eine Applikation auf einem Mobilfunkgerät oder auf einem an ein Mobilfunkgerät angeschlossenen Gerät (z.B. PDA - Personal Digital Assistant - o.ä.) verstanden, welche die MMS-Funktionalität realisiert. Eine sogenannte MMS Verbindungseinheit (M-SR) ist ein Netzelement eines MMS Dienstleisters (MMS Service Provider), das den MMS Nutzerapplikationen die MMS-Funktionalität zur Verfügung stellt. Zwischen den beteiligten Elementen werden die Informationen mit Nachrichten ausgetauscht, die in dem allgemeinen Nachrichtenflussdiagramm in Figur 1 mit Pfeilen chronologisch von oben nach unten dargestellt sind:

Zum Versenden einer Multimedianachricht schickt ein Absender O-M-UAA eine solche MM mittels einer MMS Sendeanfrage MM1_SREQ an die MMS Verbindungseinheit 0-M-RSA. In dieser MM1_SREQ können nun in vorteilhafter Weise neben den Multimedia Daten auch Metadaten MB wie beispielsweise MPEG-7 Daten enthalten sein, die die Media-Elemente in der Nachricht beschreiben. Die Beschreibung kann beispielsweise die Bedeutung der Media-Elemente in der Nachricht bzw. den Bezug der Media-Elemente untereinander beinhalten. Des weiteren kann die Beschreibung auch Informationen enthalten, die eine Transcodierung von Media-Elementen vereinfachen.

Über das reine Versenden der MM hinaus kann ein Absender in einer solchen Sendeanfrage bereits eine Zustellbenachrichtigung und/oder eine Lesebenachrichtigung für diese MM anfordern.

Nach Empfang einer Sendeanfrage weist die O-M-RSA der MM einen eineindeutigen Identifizierer zu, welcher dem O-M-UAA in einer MMS Sendebestätigung (MM1_SRES) mitgeteilt wird. Zusätzlich kann in vorteilhafter Weise der O-M-RSA den MD weitere Beschreibungsdaten hinzufügen, wie beispielsweise Ortsinformationen, die dem Endgerät nicht zur Verfügung stehen. Darüber hinaus quittiert die Sendebestätigung den erfolgreichen Empfang der MM am O-M-RSA dem Absender O-M-UAA gegenüber.

Anhand der Empfängeradressen, welche in der MM angegeben sind, bestimmt die O-M-RSA die (ein oder mehrere) zugehörige R-M-SRB und leitet die MM weiter zu dieser/-n R-M-RSB, was von dieser/-n ebenfalls quittiert werden kann (MM4_FREQ und MM4_FRES).

Nach Eintreffen der MM an R-M-RSB wird dem Empfänger R-M-UAB der MM von der R-M-RSB mittels einer MMS Empfängerbenachrichtigung MM1_NREQ mitgeteilt, dass für ihn eine Multimedianachricht zur Abholung beim R-M-RSB bereitliegt.

Auf Basis der ihm vorliegenden Empfängerbenachrichtigung entscheidet der R-M-UAB nun, ob er die MM abweist, oder den Empfang der MM entweder augenblicklich oder zu einem späteren Zeitpunkt einleitet. Das Ergebnis dieser Entscheidung teilt der R-M-UAB dem R-M-RSB unverzüglich mit: im Fall des Abweisens oder späteren Empfangs mittels einer MMS Empfängerbenachrichtigungsbestätigung MM1_NRES, welche gleichzeitig den Eingang der MM1_NREQ bestätigt und in Figur 1 dargestellt ist, sowie im Fall des augenblicklichen Empfangs, indem der R-M-UAB unverzüglich den Empfang einleitet (s.u.).

Entscheidet sich der Empfänger, R-M-UAB, (augenblicklich oder zu einem späteren Zeitpunkt) für den Empfang der MM, so fordert er - auf Basis der Informationen aus der Empfängerbenachrichtigung - die für ihn bereitgestellte Nachricht mittels einer MMS Zustellanfrage (MM1_RREQ) bei der R-M-RSB an. Mittels einer MMS Zustellungsnachricht (MM1_RRES) wird die angeforderte Multimedianachricht vom R-M-RSB an den R-M-UAB übertragen. Dieser quittiert den erfolgreichen Eingang der MM mit einer MMS Zustellungsbestätigung MM1_AREQ.

Wurde eine Zustellungsbenachrichtigung vom Absender der MM angefordert, so wurde diese Information in der MM1_RRES an den Empfänger übermittelt. Zusätzlich zur reinen Quittierung des Empfangs einer MM genehmigt oder untersagt R-M-UAB ggf. in der MM1-AREQ das Erstellen einer Zustellungsbenachrichtigung. Abhängig von dieser Entscheidung des Empfängers und basierend auf der Statusinformation in der MM1_AREQ generiert die R-M-RSB eine MMS Zustellungsbenachrichtigung. Diese wird an die R-M-RSA geleitet (MM4_FDREQ), von dieser quittiert (MM4_FDRES) und anschließend an den ursprünglichen Absender der MM (O-M-UAA) übertragen (MM1_DREQ).

Wurde zusätzlich eine Lesebenachrichtigung vom Absender der MM angefordert, so wurde diese Information ebenfalls in der MM1_RRES an den Empfänger übermittelt. Die Entscheidung, ob eine Lesebenachrichtigung erstellt wird, obliegt dabei insbesondere dem Empfänger. Dieser kann eine solche Lesebenachrichtigung mittels MM1_RRecREQ an den R-M-RSB übertragen. Nach Empfang der MM1_RRecREQ am R-M-RSB wird diese anschließend an die O-M-RSA weitergeleitet (MM4_FRREQ), der Empfang von dieser quittiert (MM4_FRRES) und anschließend an den ursprünglichen Absender der MM (O-M-UAA) übertragen (MM1_ROrigREQ).

Sowohl Zustell-, als auch Lesebenachrichtigungen beinhalten den gleichen eindeutigen Identifizierer der MM, welcher dem O-M-UAA in der MMS Sendebestätigung (MM1_SRES) mitgeteilt wurde. Zusammen mit der Angabe des Empfängers, auf den sich die Zustell-, bzw. Lesebenachrichtigung bezieht, ermöglicht dieser Identifizierer eine Zuweisung der Zustell- bzw. Lesebenachrichtigung zu einer zuvor gesendeten MM.

Eine Zustellbenachrichtigung informiert den Absender einer MM insbesondere darüber:
a.) ob und wann diese MM von den Empfängern dieser MM entweder abgewiesen, empfangen oder an andere, dritte Empfänger weitergeleitet wurde,
b.) ob und wann diese MM auf einer MMS Verbindungseinheit verfallen ist, ohne dass der Empfänger erreicht wurde, und/oder
c.) ob und wann diese MM von einer MMS Verbindungseinheit an andere Nicht-MMS-Systeme (nach entsprechender Konvertierung der MM) weitergeleitet wurde, von denen keine MMS Zustellbenachrichtigung mit detaillierterer Information zu einem späteren Zeitpunkt erwartet werden kann.

Eine Lesebenachrichtigung dagegen informiert den Absender einer MM darüber, wie und wann diese MM von den Empfängern dieser MM nach erfolgtem Empfang gehandhabt wurde, z.B. ob sie gelesen wurde, oder ob sie gelöscht wurde, ohne dass sie gelesen wurde.

Datenanpassung, partieller Empfang und Mitteilen von Befähigungen in MMS:
Charakteristika mobiler Endgeräte:
   Unterschiedliche, mobile Endgeräte unterstützen i.d.R. verschiedenste Media-Typen (z.B. Audio, Standbild, Video) und unterschiedliche Media-Formate (z.B. MP3 (=MPEG1 Layer 3) oder WAV für Audio, JPEG (Joint photographic expert group) oder GIF für Standbilder, MPEG-4 oder Quicktime für Video). Dies bedeutet für einen Nutzer B des MMS, dass Teile der Inhalte multimedialer Nachrichten, welche von einem Nutzer A des MMS an ihn gesendet werden, evtl. nicht von seinem mobilen Endgerät B erkannt werden können und somit für ihn wertlos sind. Beispielsweise unterstützt ein mobiles Endgerät B von Nutzer B MP3-Audio und JPEG-Standbilder. Sendet Nutzer A jedoch eine MM mit einem MP3-Audio-Inhalt und einem Videoinhalt an Nutzer B, so wird zwar der Audioinhalt vom Endgerät B erkannt und kann abgespielt werden; den Inhalt des Videos kann Nutzer B allerdings mit seinem Endgerät B nicht erfahren.

Darüber hinaus hat jedes mobile Endgerät unterschiedliche Eigenschaften in Konstruktion und Design, wie z.B. die Größe/Auflösung des Bildschirms oder die Anzahl der darstellbaren Farben. Dies bedeutet für einen Nutzer B des MMS, dass Inhalte multimedialer Nachrichten, welche von einem Nutzer A des MMS an ihn gesendet werden, evtl. nur teilweise, bzw. bruchstückhaft oder nur mit geringerer Farbtiefe dargestellt werden können. Beträgt beispielsweise die Bildschirmauflösung des mobilen Endgeräts B eines Nutzers B 120 x 160 Pixel, sendet Nutzer A jedoch eine MM mit einem Standbild von 240 x 320 Pixel, so kann nicht das gesamte Bild auf dem Bildschirm des Endgeräts B dargestellt werden. Lediglich ein Ausschnitt des empfangenen Bildes wird sichtbar.

Abhilfe kann eine Konvertierung bzw. Transformation oder Adaption von Nachrichteninhalten schaffen, welche an die Fähigkeiten des mobilen Endgeräts des Empfängers angepasst ist. Mittels Datenkonvertierung können vom Endgerät nicht darstellbare Media-Typen und/oder Media-Formate in solche Media-Typen und/oder Media-Formate umgewandelt werden, welche vom Endgerät unterstützt werden. Z.B. kann im oben angegebenen, ersten Fall der empfangene Videoinhalt in ein oder mehrere JPEG-Standbilder umgewandelt werden. Diese könnte das mobile Endgerät B anschließend dem Nutzer B anzeigen. Mittels Datenadaption können z.B. im zweiten, oben angegeben Fall die Größe des empfangenen Standbildes von 240 x 320 Pixel auf eine Größe von 120 x 160 Pixel angepasst werden, so dass das gesamte Bild vom Endgerät B dargestellt werden kann. Dazu ist es nicht erforderlich, dass dem Empfänger die decodierten Videodaten übermittelt werden. Vielmehr wird das Empfangsterminal diese Adaption vorzugsweise selbst (lokal) durchführen.

Verglichen mit handelsüblichen PCs sind mobile Endgeräte allerdings durch eine stark limitierte Rechenleistung und wenig zur Verfügung stehendem Speicherplatz gekennzeichnet. Für einen Nutzer B des MMS bedeutet dies, dass es unter Umständen nicht möglich sein wird, eine Konvertierung oder Adaption von Nachrichteninhalten lokal, nach Empfang, auf diesem mobilen Endgerät durchzuführen. Insbesondere, wenn die Medienadaption eine Formatkonversion erforderlich macht (z.B. MPEG-1 nach MPEG-4), bleibt vielfach als einzige Lösung Konvertierung und Adaption von Nachrichteninhalten in MMS netzwerkseitig - also von der empfängerseitigen MMS Verbindungseinheit B (R-M-RSB) - vor Auslieferung der Nachrichten an den Nutzer/Empfänger durchzuführen.

Kann in speziellen Fällen keine Konvertierung von Nachrichteninhalten durchgeführt werden, so kann es zweckmäßig sein, dass die betroffenen Nachrichteninhalte netzwerkseitig vollständig aus der MM herausgelöscht werden. Denn wenn ein bestimmter Nachrichteninhalt nicht auf dem Empfängerendgerät dargestellt werden kann, dann macht es meist keinen Sinn, diesen über die kostspielige Ressource Mobilfunknetz an den Empfänger auszuliefern. Für den Empfänger bedeutet dies partiellen Empfang der an ihn gesendeten MM; einige Information geht verloren. Stellt das Netzwerk/Server jedoch eine Speicherung von MM-Nachrichten bereit (persistant storage), hat der Teilnehmer ggf. die Möglichkeit, diese Nachricht von einem anderen Terminal bzw. Teilnehmergerät vollständig abzurufen, da hierbei andere Terminalpräferenzen zum Tragen kommen können.

### Nutzer-Präferenzen:

Unterschiedliche Nutzer von Diensten stellen i.d.R. verschiedenste Anforderungen an diesen Dienst. Jeder Nutzer hat unterschiedliche Präferenzen für die Gestaltung eines solchen Dienstes. Private Nutzer sorgen sich beispielsweise i.d.R. hauptsächlich um den finanziellen Rahmen, während für Geschäftsleute der Komfort im Fordergrund steht. Ein privater Nutzer mag z.B. keine Nachrichten im Ausland erhalten, da er dort erhöhte Gebühren bezahlen müsste. Ein Geschäftsmann dagegen möchte z.B. auch im Ausland alle Nachrichten erhalten, dafür aber keine Nachrichten an arbeitsfreien Tagen und während des Urlaubs erhalten.

### Mitteilen von Befähigungen:

Neben den Charakteristika der mobilen Endgeräte der Nutzer des MMS Dienstes spielen also auch die Präferenzen der Nutzer eine wesentliche Rolle, wenn ein Dienstanbieter MMS Nachrichten angepasst an einen Empfänger ausliefert. Um eine Anpassung einer MM an die Präferenzen des Empfängers durchführen zu können, kann ein Dienstanbieter z.B. seinen Nutzern/Kunden eine Internet-Seite zur Verfügung stellen, auf welcher diese ihre Präferenzen in Form eines Nutzerprofils erstellen können.

Um eine Konvertierung und Adaption von Nachrichteninhalten angepasst an das Endgerät eines MM-Empfängers netzwerkseitig durchführen zu können, werden der empfängerseitigen MMS Verbindungseinheit B (R-M-RSB) darüber hinaus die Befähigungen bzw. Charakteristika des mobilen Endgeräts des jeweiligen Empfängers zweckmäßigerweise bekannt gemacht. In MMS kann eine MMS Nutzerapplikation B (R-M-UAB) auf einem mobilen Endgerät B Informationen (UAProf in Figur 1) über seine Befähigungen, wie z.B. unterstützte Media-Typen und -Formate, Bildschirmauflösung und Farbtiefe, an eine MMS Zustellanfrage (MM1_RREQ) - siehe auch [3] - anhängen, mit welcher er die für ihn bereitgestellte Nachricht bei der R-M-RSB anfordert. Um diese Information nicht bei jeder Zustellanfrage kostspielig über das Mobilfunknetz übertragen zu müssen, kann sie ggf. netzwerkseitig in einem Endgeräte-Profil zwischengespeichert werden. Auf Basis dieser Information zusammen mit der Information zur Nutzerpräferenz kann die MMS Verbindungseinheit eine Konvertierung, eine Adaption und/oder ein Löschen von Nachrichteninhalten durchführen, so dass das Endgerät des MM-Empfängers in der MMS Zustellungsnachricht (MM1_RRES) eine angepasste Multimedianachricht von R-M-RSB erhält.

Flexiblere Datenanpassung mit Hilfe von Metadaten zur Beschreibung der Media-Elemente in MMS:

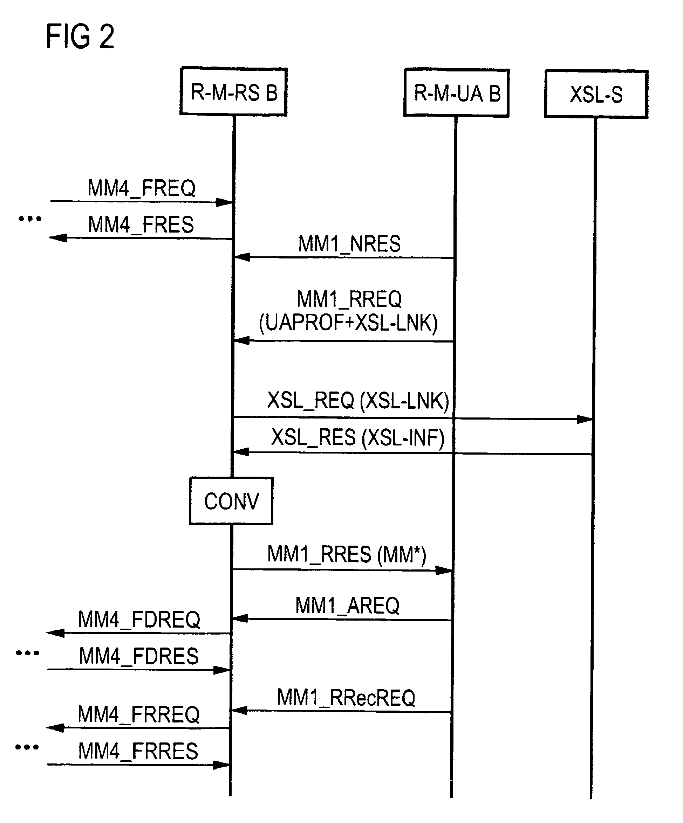

Eine flexiblere Anpassung der zu präsentierenden Nachrichten kann basierend auf der Beschreibung MB der Nachricht bzw. der Media-Elemente mit Hilfe der XSL Spezifikationen (siehe [5]) erfolgen, wie dies in [6] beschrieben ist. Die Beschreibung wird in diesem Kommunikationsszenario von dem Nachrichtensender erstellt. Für das erfindungsgemäße Verfahren können insbesondere folgende drei Ausführungsvarianten zweckmäßig sein:
a) Eine erste bevorzugte Ausführungsvariante veranschaulicht das Nachrichtenflussdiagramm von Figur 2, bei dem eine Datenanpassung auf Basis eines Links auf XSL Informationen in der UAProf-Info im Multimedia Messaging Service (MMS) durchgeführt wird. In der UAProf-Info ist ein Link auf XSL Informationen enthalten, die ein Teil der MM1_RREQ ist (UAPROF + XSL-LNK in Figur 2). Diese XSL Informationen können nach Empfang der MM1_RREQ von dem R-M-RSB gemäß dem Link von einem Server XSL-S (siehe Figur 2) mit einer Anforderungsnachricht XSL_REQ (in Figur 2) angefordert werden. Nach Erhalt der XSL Informationen XSL-INF in XSL_RES können die Nachrichten entsprechend der XSL Spezifikation formatiert werden, was durch das Akronym CONV in Figur 2 angedeutet ist, und in der MM1_RRES an den R-MUA übertragen werden. In Figur 2 sind die entsprechend der XSL-Informationen adaptierten bzw. Transformierten Nachrichten mit MM* in der MM1 RRES markiert. Des weiteren können in einer vorteilhaften, speziellen Variante auch Parameter beispielsweise in Form eines XML Dokuments in der UAProf-Info in der MM1_RREQ enthalten sein, die von der XSL Spezifikation genutzt werden. Auf diese Weise kann der R-MUA bei der MMS Zustellnachfrage Nutzer und Gerätepräferenzen übertragen.

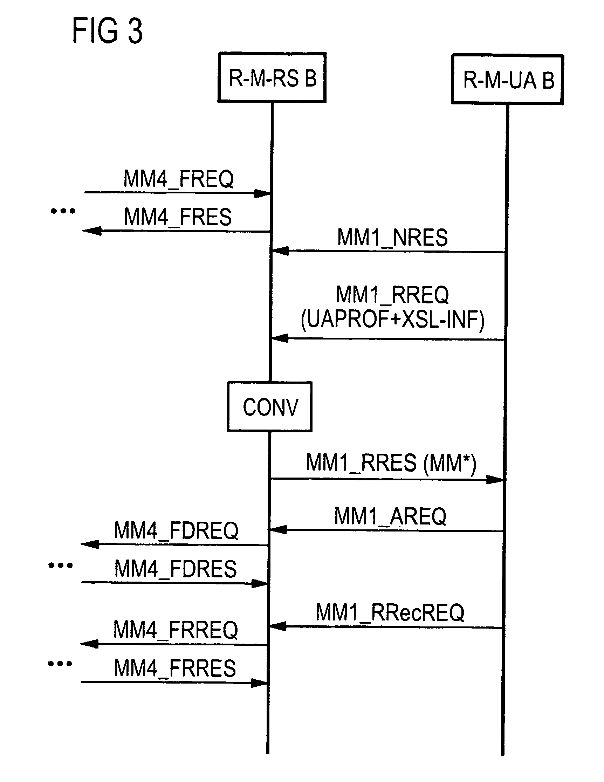

b) Figur 3 veranschaulicht an Hand eines weiteren Nachrichtenflussdiagramm eine zweite Ausführungsvariante, bei der eine Datenanpassung auf Basis von XSL Informationen in der UAProf-Info im Multimedia Messaging Service (MMS) durchgeführt wird. Dabei kann die UAProf-Info XSL Informationen enthalten, die ein Teil der MM1_RREQ ist (UAPROF + XSL-INF in Figur 3). Nach Empfang der MM1_RREQ kann der R-M-RSB die Nachricht entsprechend der XSL Spezifikation formatiert in der MM1 RRES an den R-M-UA übertragen. Diese Konversion bzw. Transformation ist dabei durch das Akronym CONV in Figur 3 angedeutet. Weiterhin sind in der Figur 3 die entsprechend der XSL-Informationen adaptierten Nachrichten mit MM* in der MM1_RRES markiert. Des weiteren können in einer vorteilhaften, speziellen Variante auch Parameter beispielsweise in Form eines XML Dokuments in der UAProf-Info in der MM1-RREQ enthalten sein, die von der XSL Spezifikation genutzt werden. Auf diese Weise kann der R-M-UA bei der MMS Zustellnachfrage Nutzer- und Gerätepräferenzen übertragen.
c) In einer weiteren Variante können die Kommunikationsmechanismen des unter a) und b) beschriebenen Nachrichtenflusses genutzt werden. Im Gegensatz zu dem dort beschriebenen Nachrichtenfluss werden jedoch die Nachrichten nicht von dem R-M-UA angepasst, sondern nur an einen sogenannten VAS Server (value added server) weitergeleitet, der die Nachricht gemäß der XSL Spezifikation als VAS modifiziert.
d) In einer weiteren Variante können die in a), b) und c) beschriebenen Kommunikationsmechanismen in dem Nachrichtenfluss genutzt werden. Zudem fügt der O-M-RS oder/und der R-M-RS oder/und in der in c) beschriebenen Variante der VAS Server Metadaten in die Beschreibung MB der Nachricht ein (z.B. vom Server unterstützte Transformationsmöglichkeiten, Positionsinformationen, Werbung), die bei der Anpassung der Nachricht für die Präsentation bzw. Darstellung genutzt werden.

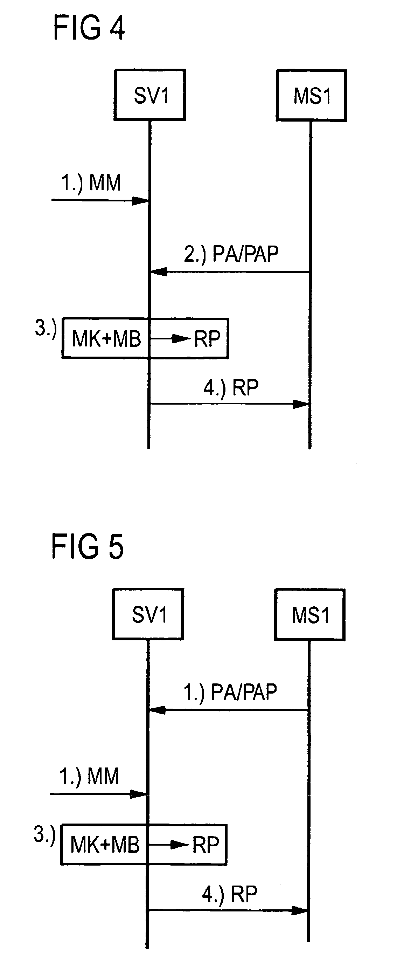

Zusammenfassend betrachtet ist also ein System bereitgestellt, das Multimedia- Nachrichten (MMN) vorzugsweise folgendermaßen übermittelt und insbesondere wie folgt charakterisiert wird:
- Eine Multimedia Nachricht MM (siehe Figur 4) enthält mindestens eine Media-Komponente MK, wie beispielsweise ein Bild, und mindestens eine Beschreibung MB der enthaltenen Media-Komponenten MK. Vorzugsweise sind die Beschreibungen MB in MPEG-7 codiert. Die Beschreibung MB kann hierbei Informationen enthalten, wie beispielsweise die Bedeutung von Media-Komponenten MK oder deren Bezug bzw. Kontext zueinander in der Nachricht.(Beispiel: Bild ist Portrait des Senders oder der Teil des Textes, der sich auf einen Bildausschnitt bezieht).
- Auf dem Nachrichtenserver (Akronym: R-M-RS) SV1 (siehe Figur 4) liegen prozedurale Anweisungen PA vor, die eine Präsentation der Media-Komponenten MK in Abhängigkeit von der Beschreibung MB für den Empfänger der Nachricht R-M-UA erstellen. Vorteilhaft sind diese Anweisungen in XSL formuliert und generieren eine Präsentation insbesondere in SMIL.
- Die prozeduralen Anweisungen PA können ggf. vom Empfänger R-M-UA (= MS1 in Figur 4) an den Server SV1 übermittelt werden.
- Die prozeduralen Anweisungen PA können ggf. Parameter PAP verwenden, die die Erstellung der Präsentation beeinflussen. Die Bedeutung der Parameter braucht nur dem Empfänger R-M- UA = MS1 bekannt zu sein, da dieser deren Auswertung in den prozeduralen Anweisungen PA spezifiziert hat.
- Die Parameter PAP können insbesondere übermittelt werden, wenn der Empfänger R-M- UA beim Server R-M RS Nachrichten abruft.

Vorzugsweise kann ein solches System auf dem MMS Protokoll aufgesetzt werden:
a) Das Empfangsgerät R-M UA (=MS1 in Figur 4) signalisiert dem empfangsseitigen Nachrichtenserver R-M-RS (=SV1 in Figur 4) einen (evtl. parametrisierten) Verweis auf die Transformations- und Formatierungsanweisungen PA, die auf einem zweiten Server vorliegen (hier in Figur 4 der Übersichtlichkeit halber weggelassen). Basierend hierauf kann der R-M RS die parametrisierten Transformations- und Formatierungsanweisungen abrufen und die Nachrichten anpassen, und anschließend angepasst (z.B. in Form einer SMIL Präsentation) an den R-M- RS übertragen.
b) Der R-M-UA signalisiert gemäß MMS (siehe [2]) dem R-M RS (evtl. parametrisierte) Transformations- und Formatierungsanweisungen. Basierend hierauf kann der R-M RS die Nachrichten anpassen und anschließend angepasst (z.B. in Form einer SMIL Präsentation) an den R-M RS übertragen.
c) Der R-M- UA signalisiert nach a) oder b) die (evtl. parametrisierte) Transformations- und Formatierungsanweisungen. Eine Anpassung der Nachricht wird durch einen weiteren Server, dem VAS Server durchgeführt, dem hierzu die Nachricht und die (evtl. parametrisierten) Transformations- und Formatierungsanweisungen oder ein Link (= Verweis) hierauf übermittelt wird.

Diese Transformation der Media-Komponenten sowie der Beschreibung der jeweiligen Multimedianachricht ermöglicht es ggf. in vorteilhafter Weise, auch weiteren Empfängern (nicht nur dem Empfänger R-M- UA, der die Anweisungen PA und deren Parameter PAP spezifiziert hat) die Anweisungen PA zu nutzen.

Entsprechend der Figur 4 wird von der Netzwerkseite eines Funkkommunikationssystems her eine Multimedianachricht MM (siehe 1.)MM) an einen Server SV1 übermittelt. Dieser speichert die Multimedianachricht oder hält einen Verweis auf diese Multimedianachricht auf einem weiteren Server bereit. Der jeweilige Server kann beispielsweise durch eine übergeordnete Netzwerkkomponente oder Logik-/Speichervorrichtung des Funkkommunikationsnetzwerks gebildet sein, auf dem sich Nachrichten und/oder Daten zum Abruf bereithalten lassen. Die jeweilige Multimedia-Nachricht MM enthält insbesondere eine Beschreibung MB, vorzugsweise Deskriptoren, ihrer Media-Komponenten MK. Solche Media-Komponenten sind beispielsweise Text-, Video-, Audio-, Photoelemente, usw.. Zur Erstellung einer neuen Repräsentation RP von mindestens einer Multimedia-Nachricht MM für mindestens ein empfangendes Teilnehmergerät MS1 wird mindestens eine prozedurale Anweisung PA und/oder deren Parameter PAP zur Erstellung der Repräsentation RP von mindestens einem empfangenden Teilnehmergerät MS1 an mindestens einen Server wie z.B. SV1 übermittelt, der mit der vorliegenden prozeduralen Anweisung eine Repräsentation RP der Multimedia-Nachricht MM auf Grund deren Beschreibung MB aus den Media-Komponenten MK und der Beschreibung MB für das jeweilig empfangende Teilnehmergerät MS1 erstellt. Die Repräsentation RP wird also insbesondere durch eine Transformation der jeweiligen Media-Komponente MK, durch eine Transformation der Beschreibung MB der jeweiligen Multimedia-Nachricht MM, und/oder durch mindestens eine zusätzliche Steuerinformation zu deren Präsentation auf dem Teilnehmergerät MS1 gebildet. Gemäß den Ausführungsbeispielen zu den Figuren 2, 3 kann die jeweilige prozedurale Anweisung PA in vorteilhafter Weise als Bestandteil und/oder als Anhang eines Zustellanfragesignals MM1 RREQ des jeweiligen Teilnehmergerät wie R-M-UAB = MS1 an den Server (siehe XSL-S in Figur 2) und/oder an mindestens einen weiteren netzwerkseitigen Server geschickt werden, von dem die für das Teilnehmergerät bestimmte Multimedianachricht MM netzwerkseitig bereitgehalten wird. Vorzugsweise kann die prozedurale Anweisung PA und/oder deren Parameter PAP in XSL (Extensible Style Sheet Language) generiert werden. Die Repräsentation RP kann insbesondere im Multimedia Messaging Service von UMTS (Universal Mobile Telecommunication Service) erstellt werden. Zusätzlich oder alternativ kann vom jeweiligen Teilnehmergerät (MS1 in Figur 4, R-M-UAB in Figur 2) dem ihm empfangsseitig zugeordneten Server (R-M-RS) mindestens ein Verweis auf die prozedurale Anweisung (PA) und/oder deren Parameter (PAP) auf mindestens einem weiteren Server signalisiert werden. Selbstverständlich lässt sich vom jeweiligen Teilnehmergerät (wie z.B. R-M-UAB in Figur 3 oder MS1 in Figur 5) dem ihm empfangsseitig zugeordneten Server (R-M-RSB in Figur 3 oder SV1 in Figur 5) die prozedurale Anweisung PA und/oder deren Parameter PAP auch direkt signalisieren. Auch kann die Repräsentation RP durch einen VAS-Server (Value Added Service) erstellt werden, dem hierzu die Multimedia-Nachricht MM sowie die prozedurale Anweisung PA und/oder deren Parameter PAP oder ein Verweis auf diese übermittelt wird.

Entsprechend Figur 4 kann die Transformation der Multimedia-Nachricht MM in die Repräsentation RP, sowie die Übermittlung der Repräsentation RP zum empfangenden Teilnehmergerät MS1 durch die Übermittlung der prozeduralen Anweisung PA und/oder deren Parameter PAP vom empfangenden Teilnehmergerät MS1 initiiert werden. Dies ist in der Figur 4 dadurch veranschaulicht, dass in Schritt 1.) zuerst die Multimedianachricht MM beim Server SV1 eintrifft. Erst dann wird in Schritt 2.) die prozedurale Anweisung PA und/oder deren Parameter PAP vom Teilnehmergerät MS1 zum Server SV1 übertragen, dort im nachfolgenden Schritt 3.) durch Transformation der Beschreibung MB und der Media-Komponenten MK der Multimedianachricht MM die Repräsentation RP generiert, und dann diese in Schritt 4.) an das Teilnehmergerät MS1 übertragen.

Insbesondere wird dabei die prozedurale Anweisung PA und/oder deren Parameter PAP von dem jeweilig empfangenden Teilnehmergerät MS1 erst nach Empfang eines Benachrichtigungssignals (MM1_NREQ), das der Server SV1 an das Teilnehmergerät MS1 übertragen hat, über das Vorliegen einer für ihn netzwerkseitig zur Abholung bereitliegenden Multimedia-Nachricht MM erstellt und an den Server SV1 übermittelt. Auslöser ist also das Eintreffen einer Notifikationsmeldung beim Teilnehmergerät vom Server kommend und zwar mit der Mitteilung, dass eine Multimedianachricht zur Abholung netzwerkseitig bereitsteht.

Die fertige Repräsentation RP kann dann vom Teilnehmergerät MS1 je nach Bedarf, d.h. zu verschiedenen Zeitpunkten, an verschiedenen Orten, usw., vom Server SV1 abgerufen werden.

Auch ist es möglich, dass die Transformation der Multimedia-Nachricht MM in die Repräsentation RP, und die Übermittlung dieser Repräsentation RP an das empfangende Teilnehmergerät MS1 durch den Empfang der Multimedia-Nachricht MM selbst bei dem dem Teilnehmergerät MS1 empfangsseitig zugeordneten Server (SV1) initiiert wird. Dies ist in der Figur 5 dadurch veranschaulicht, dass die Multimedianachricht MM der Transformation im Schritt 3.) unmittelbar vorausgeht, nachdem irgendwann vorher die prozedurale Anweisung PA und/oder deren Parameter PAP in einem vorausgehenden Schritt 1.) vom Teilnehmergerät MS1 an den Server SV1 übermittelt worden sind. Die Repräsentation wird erst im Schritt 4.) nach der Transformation der Beschreibung MB und der Media-Komponenten MK vom Server SV1 an das Teilnehmergerät MS1 übermittelt.

Auf diese Weise ist ein Subsystem für ein Funkkommunikations-Netzwerk zur Erstellung einer neuen Repräsentation von mindestens einer Multimedia-Nachricht für mindestens ein empfangendes Teilnehmergerät bereitgestellt. Diese Subsystem des Funkkommunikations-Netzwerk ist durch mindestens ein Teilnehmergerät sowie mindestens einen zugeordneten Server gebildet, die zur Durchführung des erfindungsgemäßen Verfahrens ausgebildet sind.

Im Rahmen der Erfindung sind folgende Abkürzungen verwendet worden, die insbesondere in der Mobilfunktechnik als Akronyme und ggf. Definitionen standardmäßig eingeführt oder üblich sind:
- GSM: Global System for Mobile Communication
- UMTS: Universal Mobile Telecommunication System
- SMS: Short Message Service
- MMS: Multimedia Messaging Service gemäß [2]
- MM: Multimedianachricht (Multimedia Message gemäß [2])
- VAS: Value Added Service
- MM*: entsprechend XSL-Informationen adaptierte MM
- M-UA: MMS Nutzer Applikation (MMS User Agent gemäß [2])
- M-RS: MMS Verbindungseinheit (MMS Relay/Server gemäß [2])
- O-M-UA: senderseitiger M-UA
- R-M-UA: empfängerseitiger M-UA
- O-M-RS: senderseitiges M-RS
- R-M-RS: empfängerseitiges M-RS
- MM1_SREQ: MMS Sendeanfrage
- MM1_SRES: MMS Sendebestätigung
- MM1_NREQ: MMS Empfängerbenachrichtigung
- MM1_NRES: MMS Empfängerbenachrichtigungsbestätigung
- MM1_RREQ: MMS Zustellanfrage
- MM1_RRES: MMS Zustellungsnachricht
- MM1_AREQ: MMS Zustellungsbestätigung
- MM1_DREQ: MMS Zustellstatusbenachrichtigung
- MM1_RRecREQ: MMS Lesestatusbenachrichtigung vom Empfänger
- MM1_ROrigREQ: MMS Lesestatusbenachrichtigung zum Sender
- MM4_FREQ: MMS Anfrage zur Weiterleitung einer MM
- MM4_FRES: MMS Bestätigung der Weiterleitung einer MM
- MM4_FDREQ: MMS Zustellstatusbenachrichtigung zum O-M-SR
- MM4_FDRES: MMS Bestätigung von MM4_FDREQ
- MM4_FRREQ: MMS Weiterleitung einer Lesestatusbenachrichtigung
- MM4_FRRES: MMS Bestätigung von MM4_FRREQ
- UAProf: Informationen über Befähigungen eines R-M-UA
- XSL-LNK: Link (in Form einer URL) auf XSL Informationen
- XSL-INF: XSL Informationen
- CONV: Adaption von Nachrichten gemäß XSL Spezifikationen

Auf folgende Literaturhinweise wurde vorstehend Bezug genommen:
[1] 3G TS 22.140 v.4.1.0, Release 4; 3rd Generation Partnership Project; Technical Specification Group Services and System Aspects; Service Aspects; Multimedia Messaging Service; Stage 1.
[2] 3G TS 23.140 version 4.3.0, Release 4; Third Generation Partnership Project; Technical Specification Group Terminals; Multimedia Messaging Service (MMS); Functional Description; Stage 2
[3] WAG-UAProf, Version 10-Nov-1999; Wireless Application Group, User Agent Profile Specification.
[4] P. Salembier, J. R. Smith, MPEG-7 Multimedia Description Schemes, IEEE Trans. on Circuits and Systems for Video Technology, Vol 11, No 6, June 2001.
[5] Extensible Style Sheet Language - An Overview, http://www.w3.org/Style/XSL/Overview.html.
[6] J. Heuer, U. Rauschenbach, A. Kaup, "Multimedia-Messaging-Technologien auf der Basis von MPEG-7",ITG Fachbericht 167, Elektronische Medien: Technologien, Systeme, Anwendungen, VDE Verlag, 2001.

## Patentansprüche

1. Verfahren zur Erstellung einer neuen Repräsentation (RP) von mindestens einer Multimedia-Nachricht (MM) für mindestens ein empfangendes Teilnehmergerät (MS1), die mindestens eine Media-Komponente (MK) enthält,
wobei vom Absender (O-M-VAA) der Multimedia-Nachricht(MM) mittels Metadaten (MB) die Bedeutung der Media-Komponenten (MK) in der zu versendenden Multimedia-Nachricht (MM) und/oder der Bezug deren Media-Elemente untereinander beschrieben wird, und somit die Multimedia-Nachricht (MM) als Beschreibung (MB) ihrer Media-Komponenten (MK) Metadaten (MB) enthält,
wobei diese Multimedia-Nachricht (MM) vom Absender an mindestens einen Server (SV1) versendet wird, der dem empfangenden Teilnehmergerät (MS1) empfangsseitig zugeordnet ist, und vor ihrer Weiterleitung an das empfangende Teilnehmergerät (MS1) von diesem empfangsseitig angeordneten Server (SV1) bereitgehalten wird,
wobei mindestens eine prozedurale Anweisung (PA) und/oder deren Parameter (PAP) zur Erstellung der Repräsentation (RP) von dem empfangenden Teilnehmergerät (MS1) an mindestens einen ihm empfangsseitig zugeordneten Server (SV1) übermittelt wird bzw. werden,
wobei die prozedurale Anweisung (PA) und/oder deren Parameter (PAP) von dem jeweilig empfangenden Teilnehmergerät (MS1) nach Empfang eines Benachrichtigungssignals (MM1_NREQ) über das Vorliegen der für ihn netzwerkseitig zur Abholung bereitliegenden Multimedia-Nachricht (MM) erstellt und an den empfangsseitig zugeordneten Server (SV1) übermittelt wird, und
wobei auf den Empfang dieses Benachrichtigungssignals hin die jeweilige prozedurale Anweisung (PA) und/oder deren Parameter (PAP) als Bestandteil und/oder als Anhang des Zustellanfragesignals (MM1_RREQ) des jeweilig empfangenden Teilnehmergeräts (MS1) an den empfangsseitig angeordneten Server (XSL-S, SV1) und/oder an mindestens einen weiteren netzwerkseitigen Server geschickt wird, von dem die für das empfangende Teilnehmergerät (MS1) bestimmte Multimedianachricht (MM) netzwerkseitig bereitgehalten wird,
wobei vom empfangsseitig zugeordneten Server (SV1) aufgrund der vorliegenden prozeduralen Anweisung (PA) und/oder deren Parameter (PAP) die Repräsentation (RP) durch eine Transformation der jeweiligen Media-Komponente (MK), und/oder durch eine Transformation der Metadaten (MB) der jeweiligen Multimedia-Nachricht (MM) gebildet wird, und wobei die fertige Repräsentation vom empfangenden Teilnehmergerät (MS1) vom empfangsseitig zugeordneten Server (SV1) abgerufen wird.

2. Verfahren nach Anspruch 1,
**dadurch gekennzeichnet,**
**dass** die prozedurale Anweisung (PA) und/oder deren Parameter (PAP) in XSL (Extensible Style Sheet Language) generiert werden.

3. Verfahren nach einem der vorhergehenden Ansprüche,
**dadurch gekennzeichnet,**
**dass** die Repräsentation (RP) im Multimedia Messaging Service von UMTS (Universal Mobile Telecommunication Service) erstellt wird.

4. Verfahren nach einem der vorhergehenden Ansprüche,
**dadurch gekennzeichnet,**
**dass** vom jeweilig empfangenden Teilnehmergerät (MS1, R-M-UA) dem ihm empfangsseitig zugeordneten Server (R-M-RS) mindestens ein Verweis auf die prozedurale Anweisung (PA) und/oder deren Parameter (PAP) auf mindestens einem weiteren Server signalisiert wird.

5. Verfahren nach einem der Ansprüche 1 mit 3,
**dadurch gekennzeichnet,**
**dass** vom jeweiligen empfangenden Teilnehmergerät (R-M-UAB) dem ihm empfangsseitig zugeordneten Server (R-M-RSB) die prozedurale Anweisung (PA) und/oder deren Parameter (PAP) direkt signalisiert wird.

6. Verfahren nach einem der vorhergehenden Ansprüche,
**dadurch gekennzeichnet,**
**dass** die Repräsentation (RP) durch einen VAS-Server (Value Added Service) erstellt wird, dem hierzu die Multimedia-Nachricht (MM) sowie die prozedurale Anweisung (PA) und/oder deren Parameter (PAP) oder ein Verweis auf diese übermittelt werden.

7. Verfahren nach einem der vorhergehenden Ansprüche,
**dadurch gekennzeichnet,**
**dass** die Transformation der Multimedia-Nachricht (MM) in die Repräsentation (RP), sowie die Übermittlung dieser Repräsentation (RP) zum empfangenden Teilnehmergerät (MS1) durch die Übermittlung der prozeduralen Anweisung (PA) und/oder deren Parameter (PAP) vom empfangenden Teilnehmergerät (MS1) initiiert wird.

8. Verfahren nach einem der vorhergehenden Ansprüche 1 mit 6,
**dadurch gekennzeichnet,**
**dass** die Transformation der Multimedia-Nachricht (MM) in die Repräsentation (RP), sowie die Übermittlung dieser Repräsentation (RP) zum empfangenden Teilnehmergerät (MS1) durch den Empfang der Multimedia-Nachricht (MM) bei dem den Teilnehmergerät (MS1) empfangsseitig zugeordneten Server (SV1) initiiert wird.

9. Funkkommunikations-Netzwerk mit einem Subsystem, das mindestens ein Teilnehmergerät (MS1) sowie mindestens einen zugeordneten Server (SV1) aufweist, die zur Erstellung einer neuen Repräsentation (RP) von mindestens einer Multimedia-Nachricht (MM) nach dem Verfahren entsprechend einem der Ansprüche 1 mit 8 ausgebildet sind.

## Claims

1. Method for creating a new representation (RP) of at least one multimedia message (MM) for at least one receiving subscriber device (MS1), containing at least one media component (MK),
with the significance of the media components (MK) in the multimedia message (MM) to be sent and/or the relationship of its media elements to each other being described by the sender (O-M-VAA) of the multimedia message (MM) by means of metadata (MB), the multimedia message (MM) thus containing metadata (MB) as a description (MB) of its media components (MK),
with said multimedia message (MM) being sent by the sender to at least one server (SV1), which is assigned to the receiving subscriber device (MS1) on the receive side, and being made available by this server (SV1) disposed on the receive side before being forwarded to the receiving subscriber device (MS1),
with at least one procedural instruction (PA) and/or its parameters (PAP) being transmitted from the receiving subscriber device (MS1) to at least one server (SV1) assigned to it on the receive side to create the representation (RP), with the procedural instruction (PA) and/or its parameters (PAP) being created by the subscriber device (MS1) receiving in each instance after receipt of a notification signal (MM1_NREQ) relating to the presence of the multimedia message (MM) awaiting collection by it on the network side and being transmitted to the server (SV1) assigned on the receive side and
with the respective procedural instruction (PA) and/or its parameters (PAP) being sent on receipt of said notification signal as an element and/or an attachment of the delivery request signal (MM1_RREQ) of the receiving subscriber device (MS1) in each instance to the server (XSL-S, SV1) disposed on the receive side and/or to at least one further network-side server, by which the multimedia message (MM) intended for the receiving subscriber device (MS1) is made available on the network side,
with the representation (RP) being formed by the server (SV1) assigned on the receive side based on the procedural instruction (PA) and/or its parameters (PAP) by means of a transformation of the respective media component (MK) and/or by means of a transformation of the metadata (MB) of the respective multimedia message (MM) and with the finished representation being called up by the receiving subscriber device (MS1) from the server (SV1) assigned on the receive side.

2. Method according to claim 1,
**characterised in that**
the procedural instruction (PA) and/or its parameters (PAP) is/are generated in XSL (Extensible Style Sheet Language).

3. Method according to one of the preceding claims,
**characterised in that**
the representation (RP) is created in the Multimedia Messaging Service of UMTS (Universal Mobile Telecommunication Service).

4. Method according to one of the preceding claims,
**characterised in that**
at least one reference to the procedural instruction (PA) and/or its parameters (PAP) is/are signalled by the receiving subscriber device (MS1, R-M-UA) in each instance to the server (R-M-RS) assigned to it on the receive side on at least one further server.

5. Method according to one of claims 1 to 3,
**characterised in that**
the procedural instruction (PA) and/or its parameters (PAP) is/are signalled directly by the receiving subscriber device (R-M-UB) in each instance to the server (R-M-RSB) assigned to it on the receive side.

6. Method according to one of the preceding claims,
**characterised in that**
the representation (RP) is created by a VAS (Value Added Service) server, to which the multimedia message (MM) and the procedural instruction (PA) and/or its parameters (PAP) or a reference thereto are transmitted for this purpose.

7. Method according to one of the preceding claims,
**characterised in that**
the transformation of the multimedia message (MM) to the representation (RP) and the transmission of this representation (RP) to the receiving subscriber device (MS1) are initiated by transmission of the procedural instruction (PA) and/or its parameters (PAP) by the receiving subscriber device (MS1).

8. Method according to one of the preceding claims 1 to 6,
**characterised in that**
the transformation of the multimedia message (MM) to the representation (RP) and the transmission of this representation (RP) to the receiving subscriber device (MS1) are initiated by receipt of the multimedia message (MM) at the server (SV1) assigned on the receive side to the subscriber device (MS1).

9. Radio communication network with a subsystem, having at least one subscriber device (MS1) and at least one assigned server (SV1), which are configured to create a new representation (RP) of at least one multimedia message (MM) according to the method corresponding to one of claims 1 to 8.

## Revendications

1. Procédé pour élaborer une nouvelle représentation (RP) d'au moins un message multimédia (MM) pour au moins un poste d'abonné (MS1) récepteur et contenant au moins une composante média (MK),
dans lequel l'expéditeur (O-M-VAA) du message multimédia (MM) décrit au moyen de métadonnées (MB) la signification des composantes média (MK) dans le message multimédia (MM) à envoyer et/ou le rapport de ses éléments média entre eux, le message multimédia (MM) contenant ainsi, en tant que description (MB) de ses composantes média (MK), des métadonnées (MB),
dans lequel ce message multimédia (MM) est envoyé par l'expéditeur à au moins un serveur (SV1) attribué au poste d'abonné (MS1) récepteur côté réception et, avant sa transmission au poste d'abonné (MS1) récepteur, est tenu à disposition par ce serveur (SV1) disposé côté réception,
dans lequel au moins une instruction procédurale (PA) et/ou les paramètres (PAP) de celle-ci pour élaborer la représentation (RP) sont transmis par le poste d'abonné (MS1) récepteur à au moins un serveur (SV1) attribué à celui-ci côté réception,
dans lequel l'instruction procédurale (PA) et/ou les paramètres (PAP) de celle-ci sont élaborés par le poste d'abonné (MS1) respectivement récepteur après réception d'un signal de notification (MM1_NREQ) de la présence du message multimédia (MM) mis à sa disposition pour récupération côté réseau et est transmise au serveur (SV1) attribué côté réception, et dans lequel, suite à la réception de ce signal de notification, l'instruction procédurale (PA) respective et/ou les paramètres (PAP) de celle-ci sont envoyés comme partie intégrante et/ou comme annexe du signal de demande de remise (MM1_RREQ) du poste d'abonné (MS1) respectivement récepteur au serveur (XSL-S, SV1) disposé côté réception et/ou à au moins un autre serveur côté réseau, par lequel le message multimédia (MM) destiné au poste d'abonné (MS1) récepteur est tenu à disposition côté réseau,
dans lequel le serveur (SV1) attribué côté réception, sur base de la présente instruction procédurale (PA) et/ou des paramètres de celle-ci, établit la représentation (RP) par une transformation de la composante média (MK) respective et/ou par une transformation des métadonnées (MB) du message multimédia (MM) respectif, et dans lequel la représentation achevée est appelée par le poste d'abonné (MS1) récepteur sur le serveur (SV1) attribué côté réception.

2. Procédé selon la revendication 1,
**caractérisé en ce que**
l'instruction procédurale (PA) et/ou les paramètres (PAP) de celle-ci sont générés en XSL (Extensible Style Sheet Language).

3. Procédé selon l'une des revendications précédentes,
**caractérisé en ce que**
la représentation (RP) est élaborée en "Multimedia Messaging Service" d'UMTS (Universal Mobile Telecommunication Service).

4. Procédé selon l'une des revendications précédentes,
**caractérisé en ce que**
au moins un renvoi à l'instruction procédurale (PA) et/ou aux paramètres (PAP) de celle-ci est signalé par le poste d'abonné (MS1, R-M-UA) respectivement récepteur au serveur (R-M-RS) attribué à celui-ci côté réception sur au moins un autre serveur.

5. Procédé selon l'une des revendications 1 à 3,
**caractérisé en ce que**
l'instruction procédurale (PA) et/ou les paramètres (PAP) de celle-ci sont signalés par le poste d'abonné (R-M-UAB) respectivement récepteur directement au serveur (R-M-RSB) attribué à celui-ci côté réception.

6. Procédé selon l'une des revendications précédentes,
**caractérisé en ce que**
la représentation (RP) est élaborée par un serveur VAS (Value Added Service) qui se voit transmettre à cet effet le message multimédia (MM) ainsi que l'instruction procédurale (PA) et/ou les paramètres (PAP) de celle-ci ou bien un renvoi à ceux-ci.

7. Procédé selon l'une des revendications précédentes,
**caractérisé en ce que**
la transformation du message multimédia (MM) en ladite représentation (RP) ainsi que la transmission de cette représentation (RP) au poste d'abonné (MS1) récepteur sont initiées par la transmission de l'instruction procédurale (PA) et/ou des paramètres (PAP) de celle-ci par le poste d'abonné (MS1) récepteur.

8. Procédé selon l'une des revendications 1 à 6,
**caractérisé en ce que**
la transformation du message multimédia (MM) en la représentation (RP) ainsi que la transmission de cette représentation (RP) au poste d'abonné (MS1) récepteur sont initiées par la réception du message multimédia (MM) chez le serveur (SV1) attribué au poste d'abonné (MS1) récepteur côté réception.

9. Réseau de communication radio avec un sous-système lequel comprend au moins un poste d'abonné (MS1) et au moins un serveur attribué (SV1) qui, pour élaborer une nouvelle représentation (RP) d'au moins un message multimédia (MM), sont réalisés selon le procédé suivant l'une des revendications 1 à 8.
